# EUROPEAN PATENT SPECIFICATION

(11) **EP 3 062 067 B1**
(45) Date of publication and mention of the grant of the patent: **06.01.2021**
(21) Application number: 15156760.9
(22) Date of filing: 26.02.2015
(51) Int. Cl.: G01D 5/20, G01P 3/49

(54) **Contactless sensor**
Berührungsfreie Sensorik
Capteur sans contact

(43) Date of publication of application: 31.08.2016
(73) Proprietor: Tyco Electronics Belgium EC BVBA, 8020 Oostkamp (BE)
(72) Inventor: Ocket, Tom, 8820 Torhout (BE); Weiss, Alexander, 8600 Keiem (BE)
(74) Representative: Patentanwaltskanzlei WILHELM & BECK

(56) References cited:
- WO-A1-00/25093
- WO-A1-2012/080691
- WO-A1-2012/133569
- WO-A1-2014/020670
- WO-A2-2009/004319
- DE-A1-102012 223 593
- US-A- 3 392 829
- US-A1- 2010 213 929

## Description

The invention refers to a contactless sensor for detecting a thin object.

US 2008/0079420 A1 discloses a contactless eddy current sensor, particularly for detecting essentially flat test objects, comprising at least one sensor coil, eddy currents being able to be induced in the test object. The coil, when passing by the test object, is aligned in such a manner that the coil axis is oriented essentially parallel to a line normal to a surface to the test object, and that the test object can be moved passed the sensor coil essentially parallel to the coil axis or the sensor coil can be moved passed the test object.

US 3,392,829 A discloses a container locating a vacuum sensing system for detecting a position and/or a speed of an object. The sensing system comprises a first sensor coil that is embodied to induce eddy currents in the object. The sensor coil defines a coil axis. There are different sensor coils arranged in different positions and/or orientations.

WO 00/25093 A1 discloses a control apparatus comprising at least one electrically-conductive target position. A position sensor in the form of a pulse induction device is arranged in proximity with the said at least one electrically-conductive portion to provide a single indicative of a position attribute of that portion. Relative movement is possible between the target position and a coil position of the position sensor. Control means are connected to receive such a signal from the pulse inductive device and to respond in dependence upon that signal.

WO 2014/020670 A1 discloses a compact magnetically reflection sensor. The magnetic reflection sensor is equipped with an exciter that emits a primary magnetic field, which is an alternating magnetic field, thereby generating eddy current in an electroconductive subject. A receiver is arranged that detects a secondary magnetic field generated by the eddy current, and generates a reception signal. The excitation coil and the reception coil are arranged at a front end of the sensor.

US 2010/0213929 A1 discloses a rotor blade sensor for detecting a rotor blade comprising an electrical oscillator arranged to generate an oscillating signal. An antenna includes a coil having one or two winding layers coupled to the electrical oscillator.

DE 10 2012 223 593 A1 discloses a sensor for detecting rotation of an object. The sensor comprises a longitudinal shape with a generator for an electromagnetic field and with a magnetic sensor. The magnetic sensor is arranged at a tip end of the sensor. The magnetic field generator is arranged behind the magnetic sensor.

WO 2012/080691 A1 discloses an apparatus for using monitoring the clearance between a stationary object and one or more moving objects comprising a pair of electrical proximity sensors mounted in relation to the stationary object with their sensitive fields directed towards the path of the moving object and at an angle to each other.

WO 2012/133569 A1 discloses an eddy current sensor having excellent detection sensitivity, a compact sensor head, and a long cable. The sensor is provided with: a sensor head having an inductive element; a cable connected to both ends of the inductive element of the sensor head; and an amplifier circuit connected between the two terminals of the cable. The amplifier circuit is provided with an oscillation circuit and an amplifier capacitive element connected between the two terminals of the cable. The sensor head has a head capacitive element provided in the inductive element. The inductive element, the head capacitive element, the cable and the amplifier capacitive element form a resonance circuit for an alternating current signal output from the oscillation circuit.

WO 2009/004319 A2 discloses an eddy current sensor for use as a dynamic proximity sensor, particularly for monitoring of blade tip timing and clearance in turbomachinery, as a common coil for use in both generating a magnetic field in a proximate region and detecting the effect of eddy currents generated by said field in electrically conductive objects passing through said region. The coil is wound on a rectangular or other elongate former so that the coil is itself elongate in section. This can improve the resolution of the device when used for sensing the passage of objects of elongate section such as a turbine blade tip when the sensor coil is oriented with its shorter cross-sectional dimension aligned with the shorter cross-sectional dimension of the respective object.

The object of the present invention is to provide an improved contactless sensor.

The object is attained by the contactless sensor and the apparatus according to the independent claims.

Further embodiments are disclosed in the dependent claims.

The proposed inductive sensor provides an improved design that provides a higher sensitivity for detecting an object. The sensor may be used for detecting a position and/or a speed of an object. This advantage is attained, because the proposed sensor provides a higher change in inductance variation during the passing of the object. Furthermore, the proposed inductive sensor can easily be mounted to a housing for example a turbo charger housing for detecting a passing by of a charger blade.

Furthermore, the proposed sensor comprises a compact shape, wherein the coil axis is arranged with an angle between 30° and 85° with respect to a longitudinal axis of the sensor pin. The inclined arrangement of the sensor coil has the advantage that the diameter of the coil is larger within the predetermined diameter of the sensor. The larger the diameter of the coil is the higher is the sensitivity of the sensor coil. The inclined position of the coil plane allows to detect a higher inductance variation caused by of a passing object. Also the sensor is arranged in a straight line, the coil plane is tilted to the longitudinal axis of the sensor.

The sensor has a longitudinal shape, wherein a coil bobbin with a bottom plane, a stud and a cover plate is arranged at the front end of the sensor.

Experiments have shown that an increasing of the inductance variation caused by an object that passes by the sensor coil is improved by an arrangement of the sensor coil in this way that the coil defines a coil axis, wherein the coil axis is arranged with an angle between 30° and 85° with respect to a longitudinal axis of the sensor pin. Experiments have shown that an improved sensor can be attained by disposing the coil axis with an angle between 65° and 75° with regard to the longitudinal axis of the sensor pin.

In a further embodiment, the coil bobbin with the bottom plane, the stud and the cover plate are made in one piece and made for example of plastics. To produce the bottom plane, the stud and the cover plate in one piece simplifies the production process. Using plastics has the advantage that it can easily be processed.

In a further embodiment, the sensor has a cylindrical shape, and wherein particularly the rim section with the partial cylindrical shape is arranged at most on the same cylindrical surface as the cylindrical shape of an outer face of the sensor or nearer to a middle axis of the sensor. Therefore the cover plate does not radially extend over the shape of the sensor pin. This is of advantage for the mounting process because the cover plate and therefore the sensor coil is protected by the larger shape of the sensor.

In a further embodiment, the front end of the sensor is shaped as a partly cut tip, wherein the sensor coil is arranged at most at the same distance or behind the front end of the cut tip. The sensor pin is usually mounted by pushing the sensor with the front end in an opening of a housing. Since the tip is the most projecting part of the sensor pin, the sensor coil is protected during the mounting process.

In a further embodiment, a second sensor coil may be used. The second sensor coil improves the sensitivity of the sensor.

In a further embodiment, the first coil and the second coil are arranged in a mirror inverted position with regard to a middle plane, wherein the longitudinal middle axis of the sensor is part of the middle plane. This arrangement provides a compact shape of the sensor comprising two sensor coils.

In a further embodiment, the second sensor coil is constructed identically to the first sensor coil.

In an embodiment, the apparatus and the sensor comprise fixing means for fixing the sensor with regard to the apparatus in a predetermined rotational orientation of the sensor coil. Therefore the mounting of the sensor in the predetermined orientation is easily attained.

In a further embodiment, there is an apparatus provided with a receiving hole for a sensor pin with a sensor coil. The receiving hole has the same cross-sectional area as the sensor. However, the dimension of the cross-section area is a little bit larger than the cross-section area of the sensor. In one embodiment, the cross-section area of the sensor and the cross-section area of the receiving hole is circular.

In one embodiment, the apparatus is a housing of a turbo charger and the object is a blade of the turbo charger. The sensor coil axis when passing the object is aligned in such a manner so as to be arranged with an angle between 30° and 85° to a surface of a blade of the turbo charger, wherein the sensor coil axis when passing the object is particularly aligned in such a manner so as to be arranged with an angle between 65° and 75° to a first plane that is defined by a rotation axis of the blade and the longitudinal axis of the sensor.
Fig. 1 shows an apparatus with a contactless eddy current sensor,
Fig. 2 shows a schematic, perspective view of the sensor,
Fig. 3 shows a second cross-sectional view of the sensor and the turbo charger,
Fig. 4 shows a further cross-sectional view of the sensor and the turbo charger of Fig.3,
Fig. 5 shows a schematic view of an embodiment of the sensor,
Fig. 6 shows a schematic view of a sensor tip with a winding machine, and
Fig. 7 shows a schematic view of a further embodiment of the sensor with two sensor coils.

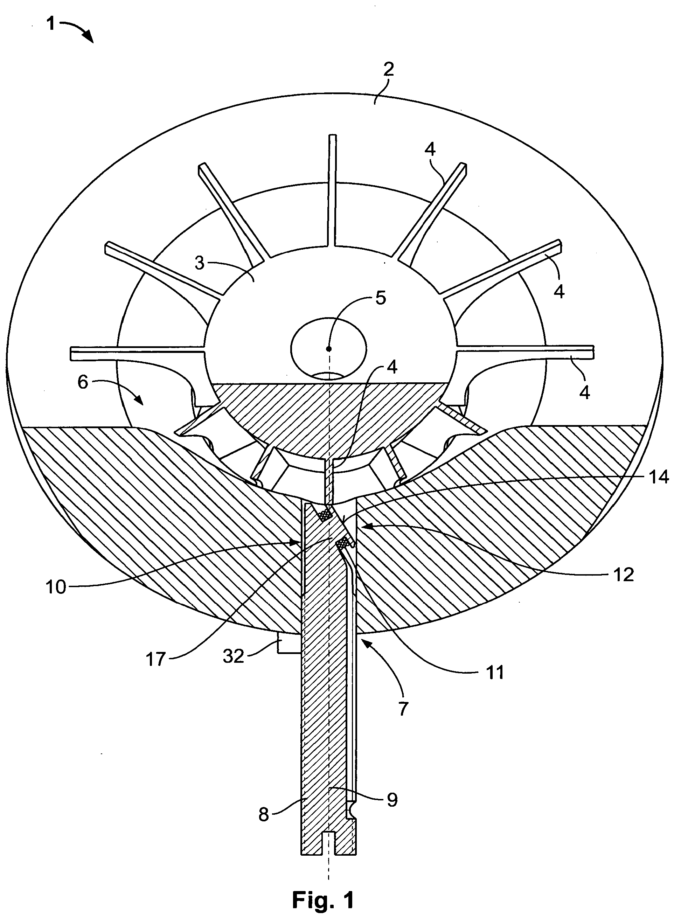

Fig. 1 shows a cross-sectional view of an apparatus that is embodied as a turbo charger 1. The turbo charger 1 comprises a housing 2, a turbo rotor 3 with several blades 4. The turbo rotor 3 is arranged in a chamber 6 of the housing 2 and rotatable fixed to a first axis 5. The blades 4 comprise a thin shape and extend radially with regard to the first axis 5. The thin bodies of the blades 4 are arranged perpendicular to the first axis 5. The housing 2 comprises a mounting hole 7 that is guided from outside to the chamber 6. In the hole 7 a sensor 8 is arranged. The sensor 8 is fixed by fixing means 32 to the housing 2 in a predetermined rotational position referring to the hole 7. The fixing means 32 may be embodied as form-fit and/or press-fit means. For example the fixing means may be a bolt and a thread or a partition wall and a nut.

The sensor 8 is embodied as a contactless sensor for detecting an object especially a thin object. The object is made of an electrically conducting material. The blade 4 represents such an object. A front end 10 of the sensor 8 is arranged nearby the opening of the hole 7 to the chamber 6. The sensor 8 comprises a longitudinal middle sensor axis 9. The sensor 8 has a longitudinal shape that projects from the hole 7 to the outside of the housing 2. The sensor axis 9 is arranged radially to the first axis 5 and the sensor axis 9 is arranged in a first plane that comprises the first axis 5. As a result, a blade 4 that rotates around the first axis is arranged in parallel to the first plane when the blade 4 is in a central position with regard to the hole 7 as shown in Fig. 1. The cross-section of Fig. 1 is defined by the first plane that is defined by the first axis 5 and the sensor axis 9. Instead of the turbo charger 1, the apparatus may be embodied as any other apparatus that is used for detecting an object, particularly for detecting a position and/or a speed of the object. The sensor coil 11 is arranged on a coil bobbin 12 that comprises a bottom plane 13, a stud 17 that connects the bottom plane 13 with a cover plate 14. A wire of the coil 11 is wound around the stud 17. The bottom plane 13 is a flat plane that is disposed on the front end 10 of the sensor 8. The bottom plane 13 is arranged in a predetermined angle with respect to the sensor axis 9. Depending on the used embodiment, the angle between the bottom plane 13 and the longitudinal axis may be between 30° and 85° or particularly between 60° and 75°.

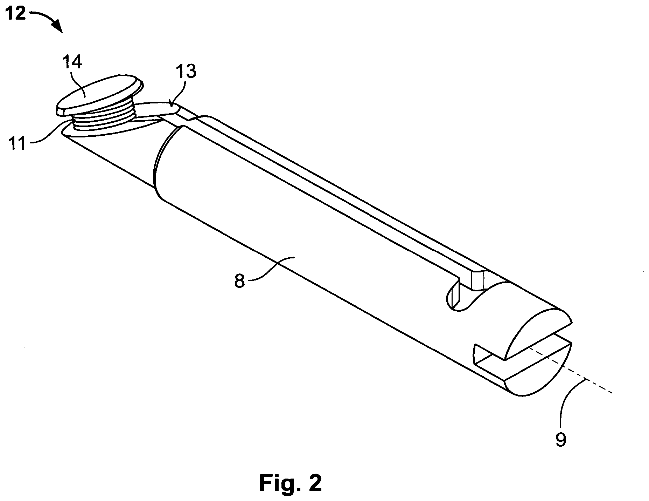

Fig. 2 shows a cross sectional view of the sensor 8.

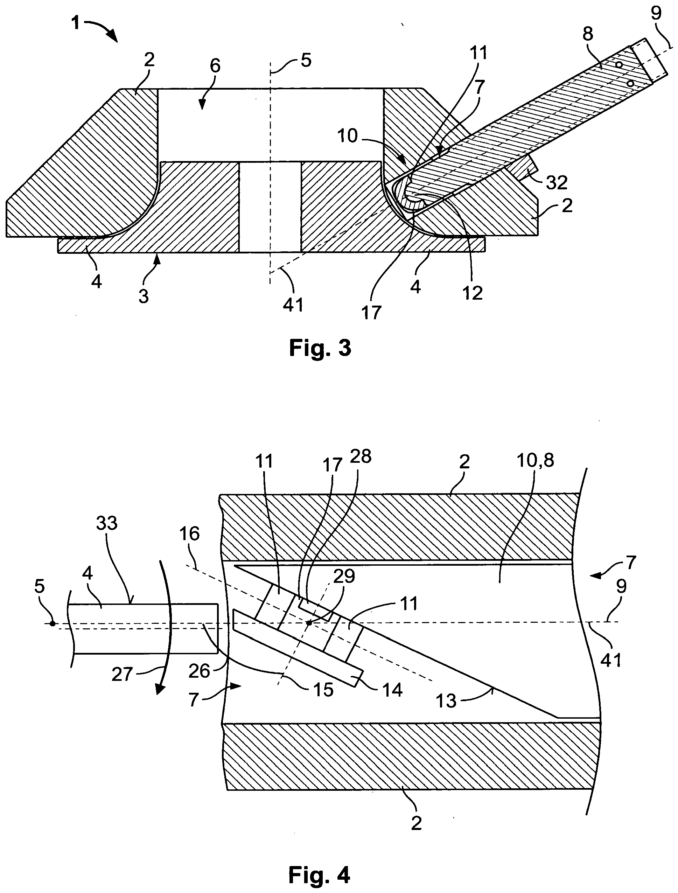

Fig. 3 shows a further cross sectional view of the sensor 8 with the apparatus 1 of Fig. 1, wherein the apparatus is cut in a first plane 41 that is defined by the first axis 5 and the longitudinal middle axis 9 of the sensor. At the front end 10 the sensor coil 11 is disposed on the sensor 8. In the shown embodiment, the sensor 8 has a circular cross-sectional area. The hole 7 also has at least partly a circular cross-sectional area. However the radius of the circular cross-sectional area of the hole 7 is a bit larger than the radius of the cross-sectional circular area of the sensor 8. Thus the sensor 8 is guided by the hole 7 and aligned according to a predetermined angle with regard to the fist axis 5.

Fig. 4 shows an example which is not part of the present invention. Fig. 4 shows a further cross-sectional view of a blade 4 and the front end 10 of the sensor 8. The blade 4 is rotated in a depicted rotation direction 27 around the first axis 4. The first axis 4 is vertical to the plane of the figure. The blade 4 is shown in a middle position with regard to the hole 7 and is therefore arranged along a first plane that is defined by the first axis 5 and the longitudinal middle axis 9 of the sensor 8. The cross-sectional view of Fig. 4 is perpendicular to the first plane 41 and a surface 33 of the thin blade 4 in an end area that is depicted. The sensor coil 11 defines a coil axis 15 that is arranged vertical to a coil plane 16 that is depicted with a dashed line. The coil plane 16 is defined by the circular ring of the wound wire of the sensor coil 11. The coil plane 16 is arranged with an angle of 90° with regard to the coil axis 15.

In the shown example, the sensor coil 11 is arranged in such a manner that the coil axis 15 is aligned with regard to the plane of the blade 4 with an angle 26 of 60° with regard to a first plane that is defined by the longitudinal middle axis 9 of the sensor and the first axis 5 of the turbo charger 1. The blade 4 is also aligned along the first plane, when the blade 4 is in the middle of the hole 7 as shown in fig. 4. The plane of the blade 4 is in the first plane. Depending on the used embodiment, the sensor coil 11 may be arranged in such a manner that the coil axis 15 is arranged with regard to the first plane in a range between 30° and 85°, particularly in a range between 65° and 75°. Experiments have shown that with this alignment of the sensor coil 11 higher inductance variation is attained by passing of the blade 4. In turbo chargers for example the blades are made out of aluminum. The blades 4 influence the inductance of the sensor coil via eddy currents that are generated in the blades. When the sensor coil 11 is arranged in such a way that the coil axis 15 is put at an angle of 0°, there are only eddy currents flowing at a surface of the blades. But this surface has only a thickness of around 1 mm. When the arrangement of the sensor coil 11 is changed to a greater angle, for example an angle up to 50° or 80°, then the magnetic fields of the sensor coil go more through a deeper thickness of the surface of the blades 4. Therefore higher eddy currents are generated and thus a bigger variation in the inductance of the sensor coil is generated. Furthermore the inclined arrangement of the sensor coil 11 allows an increased diameter of the sensor coil within the given thickness of the sensor 8.

The wire of the sensor coil 11 is connected to an analyzing circuit that measures the change of the inductance. Furthermore the sensor coil 11 may comprise a permanent magnet 28 for generating a magnetic field. In another embodiment, the sensor coil 11 may be connected with a voltage or current source that provides an AC current for generating a magnetic field by the sensor coil 11.

A center point 29 of the sensor coil 11 is arranged in a middle of the hole 7 and on the middle longitudinal axis 9 of the sensor 8 i.e. the sensor axis 9. The center point 29 is arranged on the middle axis 15 of the coil 11 and is arranged in the middle of the height of the coil 11.

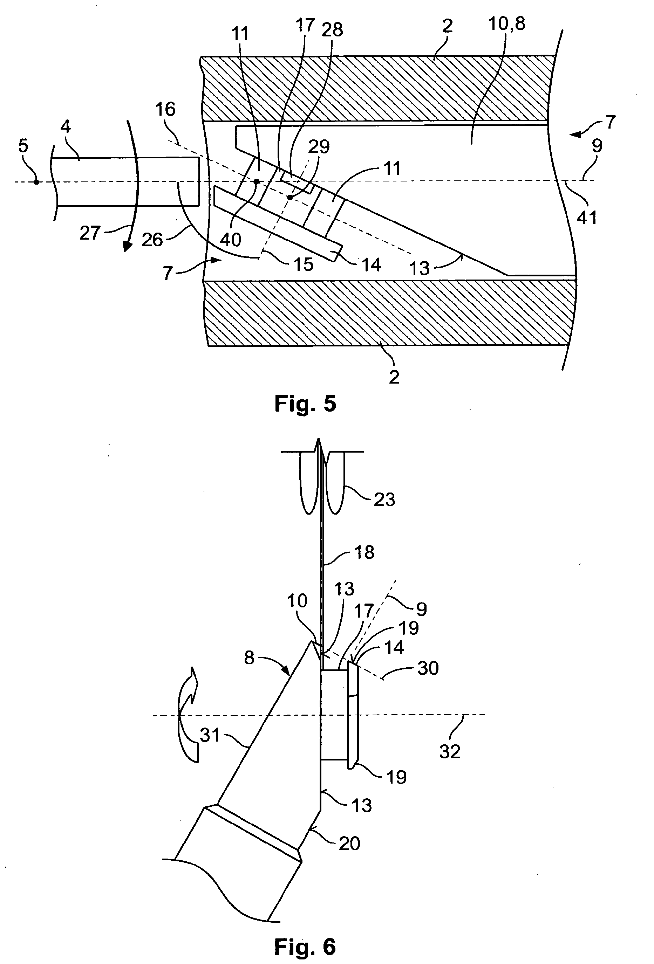

Fig. 5 shows an embodiment according to the invention of a sensor 8 with a sensor coil 11, wherein a center point 29 of the sensor coil 11 is out of the longitudinal middle axis 9. An arrow 27 depicts schematically the rotation direction of the blade 4 Experiments have shown that the sensitivity of the sensor coil 11 which means the variation of the inductance during the passing by of a blade 4 is increased by moving the position of the sensor coil 11 in this way that a center point 29 of the sensor coil 11 is arranged out of the center of the hole 7, which means also out of the middle axis 9 as shown in Fig. 5. In this embodiment, the center point 29 of the sensor coil 11 is moved to the side to that the rotation direction 27 of the blade 4 points. In the shown embodiment, the center point 29 is arranged beside the sensor axis 9.

The sensor coil 11 comprises a middle point 40 in cross sectional view of the windings. The middle point 40 is arranged in the middle of the height of the cross sectional area of the sensor coil 11 and in the middle of the width of the sensor coil 11, wherein the cross sectional area is in the first plane. The middle point 40 is in the first plane and is arranged in an outer section of the sensor coil 11 directed to the blade 4. In an embodiment, the sensor coil 11 is arranged in that way that the outer middle point 40 is on the longitudinal middle axis 9 which is also a middle axis of the hole 7.

Fig. 6 shows a side view of a sensor pin 31 of the sensor 8, whereby a wire 18, is wound around the stud 17 that connects the bottom plane 13 with the cover plate 14. In this Figure it can be clearly seen that the wire 18 can be wound by a conventional winding machine 23 around the stud 17 by turning the sensor pin 31 around a rotation axis 32 as depicted by an arrow. The arrangement of the bottom plane 13 in an angle between 30° to 85°, particularly between 65° to 75° with regard to the longitudinal sensor axis 9 has the advantage that a conventional winding machine 23 can be used for mounting the wire 18 on the stud 17.

The front end 10 of the sensor pin 31 is at least at the same front position 30 with respect to the longitudinal axis 9 as a rim 19 of the cover plate 14. Therefore the rim 19 and the sensor coil 11 is protected during the mounting process of the sensor pin 31. The tip housing protects the sensor coil 11. Additionally it can be seen from Fig. 5 that the rim 19 is arranged with respect to the sensor axis 9 in a radial direction within the outer surface 20 of the sensor pin 8. Therefore the sensor coil 11 is protected also in this direction which means in a radial direction referring to the sensor axis during the mounting process. In a further embodiment, the front end 10 with the sensor coil 11 may be embedded in a tip housing for example made of plastics.

Depending on the used embodiment, the cover plate 14, the stud 17 and the sensor pin 31 can be made of different parts. However, it is of advantage to produce the sensor pin 31 with the bottom plane 13, the stud 17 and the cover plate 14 in one piece. For example plastics can be used to produce the sensor 8.

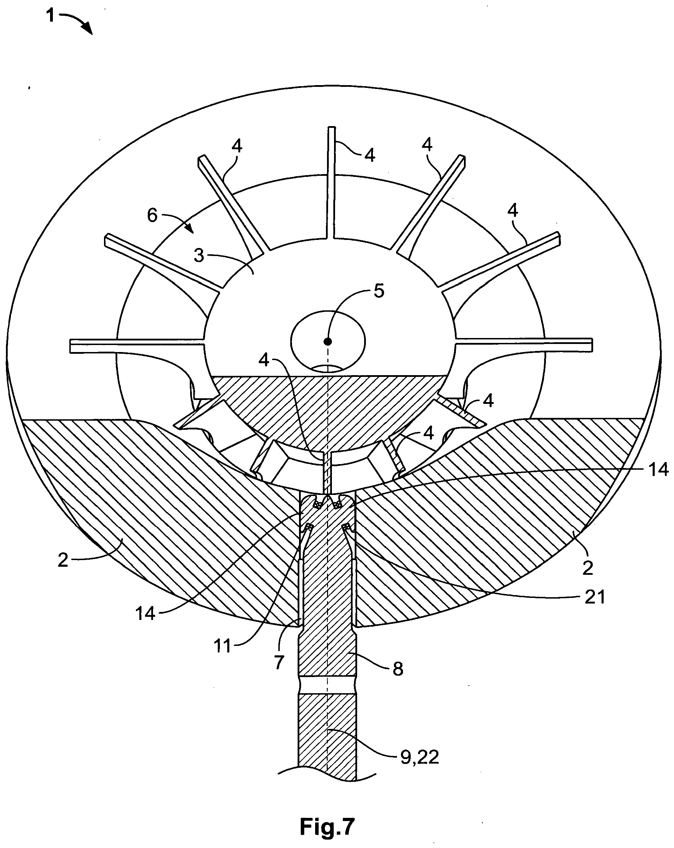

Fig. 7 depicts a further embodiment, wherein at the front end 10 of the sensor 8 two sensor coils 11, 21 are disposed. The two sensor coils 11, 21 are arranged with respect to a middle plane 22 that is defined by the longitudinal axis 9 as shown in a mirror inverted position. In this embodiment, the cover plates 14 of the two sensor coils 11, 21 project radially with regard to the sensor axis 9 more than the sensor pin 8. A radially outer face of the cover plates 14 of the first and the second sensor coil 11, 21 comprise a partial cylindrical shape. Therefore a precise alignment of the sensor coils 11, 21 in the circular hole 7 is attained. The two sensor coils 11, 21 are connected with the analyzing circuit in such a way that the signals of the two sensor coils are summed up to increase the sensitivity of the sensor.

The proposed sensor can be used as an inductive speed sensor, especially for applications with objects with a small thickness, for example for detecting the movement of blades of a turbo charger. The sensor 8 may be used to measure a rotation speed of the turbo rotor 3. The proposed sensor is very compact and may be produced with a typical thickness of about 6 mm diameter. The sensor can be used in a high temperature working area up to 250°C. Furthermore, high frequencies up to 300,000 rpm and more can be analyzed with the proposed sensor. Furthermore the sensor can be used as a contactless eddy current sensor, for example detecting objects made of aluminum. Depending on the used embodiment, the sensor coil may comprise a permanent magnet 28. In this case, the magnetic field of the sensor coil is influenced by the magnetic field of the eddy current induced on the object. This will induce a voltage in the sensor coil, where the frequency is related to the revolution speed of the object.

If there is no permanent magnet, the sensor coil is energized with an A/C current by a voltage or current source. The A/C current creates a magnetic field via the sensor coil 11. The sensor coil 11 comprises a characteristic impedance which is increased depending on electrically conductive material in the magnetic field of the sensor coil. If an electrically conductive object approaches the sensor coil, then eddy currents are generated in the area of the surface of the electrically conductive object by the magnetic field of the sensor coil. This eddy currents in return act on the sensor coil in such a manner that the impedance of the sensor coil is decreased. The eddy current work against the magnetic field, so for the same current a lower flux will go through the sensor coil 11. The higher the decrease the easier it can be detected by the electronics. Large surfaces facing toward the sensor coil generate in this connection a particularly large impedance decrease. If, however, thin, and in particular narrow, objects are supposed to be detected, then, on the objects' narrow side facing the front face of the coil, eddy currents can only be formed to a limited extend.

When the object passes the sensor coil, however the stray field induces, in the lateral faces parallel to the coil axis, eddy currents which likewise lead to an increase of the impedance. Due to this, the characteristic profile in the form of a peak arises, where the impedance increases becomes minimal when the object comes to lie so as to be centered on the coil axis. In this position no eddy currents in the lateral faces of the object due to stray fields of the coil are possible. Merely the eddy currents induced in the narrow side of the object have an effect.

The analyzing circuit senses the change of the impedance of the sensor coil 11. The analyzing circuit may detect a change in an amplitude of the voltage and/or current. There may be used a fixed voltage or a fixed current. The amplitude of a ratio of voltage to current changes if an object made of electrically conducting material moves in the proximity of the sensor coil 11. In case of a fixed current, only the voltage needs to be measured and vice versa of the sensor coil and/or a change in a frequency phase of the current versus the voltage of the sensor coil to detect the presence of an object. In a further embodiment the analyzing circuit may be embodied to measure an inductance change of the sensor coil to detect an object. In a further embodiment the analyzing circuit may be embodied to measure an induced voltage in the sensor coil in case that the sensor coil comprises a permanent magnet. Furthermore the analyzing circuit may be embodied to measure a change in the inductance with a change of the amplitude of current and/or voltage or with a phase change of the phase of current and/or voltage.

Depending on the used embodiment, also the sensor with the sensor coil can be moved or rotated around an object. For sensing the object a relative movement between the sensor and the object is necessary.

### Reference list

- 1: Turbo charger
- 2: housing
- 3: turbo rotor
- 4: blade
- 5: first axis
- 6: chamber
- 7: hole
- 8: sensor pin
- 9: sensor axis
- 10: front end
- 11: sensor coil
- 12: coil bobbin
- 13: bottom plane
- 14: cover plate
- 15: coil axis
- 16: coil plane
- 17: stud
- 18: wire
- 19: rim
- 20: outer surface
- 21: second sensor coil
- 22: middle plane
- 24: winding axis
- 26: angle
- 27: rotation direction
- 28: permanent magnet
- 29: center point
- 30: front position
- 31: sensor pin
- 32: fixing means
- 33: surface
- 40: middle point
- 41: first plane

## Claims

1. A contactless sensor (8) for detecting a position and/or a speed of an object (4), comprising:
at least one sensor coil (11) that is embodied to induce eddy currents in the object (4), wherein the sensor coil (11) is arranged at a front end (10) of the sensor (8), on a coil bobbin (12),
wherein the sensor (8) has a longitudinal shape, wherein the coil bobbin (12) with a bottom plane (13), a stud (17) and a cover plate (14) is arranged at the front end (10) of the sensor (8), and wherein a wire of the sensor coil (11) is wound around the stud (17),
wherein the sensor coil (11) defines a coil axis (15), **characterised in that** the sensor coil (11) is arranged in a way that the coil axis (15) is arranged in an angle between 30° and 85° with respect to a longitudinal axis (9) of the sensor (8), and that the sensor coil (11) is arranged in a way that a center point (29) of the sensor coil (11) that is arranged on the coil axis (15) is arranged beside a longitudinal middle axis (9) of the sensor (8).

2. Sensor of claim 1, wherein the coil axis (15) is arranged with an angle between 65° and 75° to the longitudinal axis (9) of the sensor (8).

3. Sensor of any one of the preceding claims, wherein the coil bobbin (12) with the bottom plane (13), the stud (17) and the cover plate (14) is made in one piece for example made of plastics.

4. Sensor according to any one of the preceding claims,
wherein the bottom plane (13) cuts a sensor pin (31) at the front end (10) defining a cut tip, wherein the sensor coil (11) is at most at the same distance or behind the front end of the sensor pin (31).

5. Sensor of any one of the preceding claims, wherein a second sensor coil (21) is arranged at the front end (10) of the sensor (8).

6. Sensor of claim 5, wherein the first coil (11) and the second coil (21) are arranged in a mirror inverted position with regard to a middle plane (22), wherein a middle longitudinal axis (9) of the sensor (8) is part of the middle plane (22).

7. Sensor of claim 5 or 6, wherein the second sensor coil (21) is constructed identically to the first sensor coil (11).

8. Sensor of claim 4, wherein the front end (10) of the sensor pin (31) is at least at the same front position (30) with respect to the longitudinal axis (9) of the sensor as a rim (19) of the cover plate (14) protecting the rim (19) and the coil (11) during a mounting process of the sensor.

9. Sensor of claim 8, wherein the rim (19) of the plate (14) is arranged with respect to the sensor axis (9) in a radial direction within the outer surface (20) of the sensor pin (31).

10. Apparatus with a receiving hole (7), with a sensor (8) according to one of the preceding claims, wherein the sensor (8) is arranged within the receiving hole (7), wherein fixing means (32) are disposed for fixing the sensor (8) in a predetermined rotational orientation with regard to the hole (7).

11. Apparatus of claim 10, wherein the receiving hole (7) comprises the same cross-sectional area as the sensor (8), particularly a circular cross-sectional area.

12. Turbocharger (1) comprising an apparatus according to one of the claims 10 or 11, wherein the turbocharger (1) further comprises a turbo rotor (3) with blades (4), wherein the apparatus is a housing (2) of said turbo charger and the object is a blade (4) of said turbo rotor (3), wherein the object rotates around a first axis (5), wherein the sensor coil axis (15) when passing the object (4) is aligned in such a manner so as to be arranged with an angle between 30° and 85° to a surface (33) of the blade (4), wherein the sensor coil axis (15) when passing the object is particularly aligned in such a manner so as to be arranged with an angle between 65° and 75° to a first plane (41) that is defined by the first axis (4) and the longitudinal axis (9) of the sensor (8) .

## Patentansprüche

1. Berührungsfreier Sensor (8) zum Erkennen einer Position und/oder einer Geschwindigkeit eines Objekts (4), umfassend
mindestens eine Sensorspule (11), die dazu ausgebildet ist, Wirbelströme in dem Objekt (4) zu induzieren, wobei die Sensorspule (11) an einem vorderen Ende (10) des Sensors (8) auf einem Spulenkörper (12) angeordnet ist,
wobei der Sensor (8) eine längliche Form aufweist, wobei der Spulenkörper (12) mit einer unteren Ebene (13), einem Bolzen (17) und einer Abdeckplatte (14) am vorderen Ende (10) des Sensors (8) angeordnet ist, und wobei ein Draht der Sensorspule (11) um den Bolzen (17) gewickelt ist,
wobei die Sensorspule (11) eine Spulenachse (15) definiert, **dadurch gekennzeichnet, dass** die Sensorspule (11) derart angeordnet ist, dass die Spulenachse (15) in einem Winkel zwischen 30° und 85° in Bezug auf eine Längsachse (9) des Sensors (8) angeordnet ist und dass die Sensorspule (11) derart angeordnet ist, dass ein Mittelpunkt (29) der auf der Spulenachse (15) angeordneten Sensorspule (11) neben einer Längsmittelachse (9) des Sensors (8) angeordnet ist.

2. Sensor gemäß Anspruch 1, wobei die Spulenachse (15) in einem Winkel zwischen 65° und 75° zur Längsachse (9) des Sensors (8) angeordnet ist.

3. Sensor gemäß einem der vorhergehenden Ansprüche, wobei der Spulenkörper (12) mit der unteren Ebene (13), dem Bolzen (17) und der Abdeckplatte (14) aus einem Stück, beispielsweise aus Kunststoff, hergestellt ist.

4. Sensor gemäß einem der vorhergehenden Ansprüche, wobei die untere Ebene (13) einen Sensorstift (31) am vorderen Ende (10) schneidet und eine Schnittspitze definiert, wobei sich die Sensorspule (11) höchstens in der gleichen Entfernung oder hinter dem vorderen Ende des Sensorstifts (31) befindet.

5. Sensor gemäß einem der vorhergehenden Ansprüche, wobei eine zweite Sensorspule (21) am vorderen Ende (10) des Sensors (8) angeordnet ist.

6. Sensor gemäß Anspruch 5, wobei die erste Spule (11) und die zweite Spule (21) in einer spiegelverkehrten Position in Bezug auf eine Mittelebene (22) angeordnet sind, wobei eine Mittellängsachse (9) des Sensors (8) Teil der Mittelebene (22) ist.

7. Sensor gemäß Anspruch 5 oder 6, wobei die zweite Sensorspule (21) identisch mit der ersten Sensorspule (11) ausgeführt ist.

8. Sensor gemäß Anspruch 4, wobei sich das vordere Ende (10) des Sensorstifts (31) mindestens an der gleichen vorderen Position (30) in Bezug auf die Längsachse (9) des Sensors wie ein Rand (19) der Abdeckplatte (14) befindet und den Rand (19) und die Spule (11) während eines Montagevorgangs des Sensors schützt.

9. Sensor gemäß Anspruch 8, wobei der Rand (19) der Platte (14) in Bezug auf die Sensorachse (9) in radialer Richtung innerhalb der Außenfläche (20) des Sensorstifts (31) angeordnet ist.

10. Vorrichtung mit einem Aufnahmeloch (7), mit einem Sensor (8) gemäß einem der vorhergehenden Ansprüche, wobei der Sensor (8) innerhalb des Aufnahmelochs (7) angeordnet ist, wobei Befestigungsmittel (32) zum Befestigen des Sensors (8) in einer vorbestimmten drehbaren Ausrichtung in Bezug auf das Loch (7) angeordnet sind.

11. Vorrichtung gemäß Anspruch 10, wobei das Aufnahmeloch (7) die gleiche Querschnittsfläche wie der Sensor (8), insbesondere eine kreisförmige Querschnittsfläche, umfasst.

12. Turbolader (1), umfassend eine Vorrichtung gemäß einem der Ansprüche 10 oder 11,
wobei der Turbolader (1) ferner einen Turborotor (3) mit Schaufeln (4) umfasst, wobei die Vorrichtung ein Gehäuse (2) des Turboladers ist und das Objekt eine Schaufel (4) des Turborotors (3) ist,
wobei das Objekt um eine erste Achse (5) rotiert,
wobei die Sensorspulenachse (15) beim Vorbeilaufen am Objekt (4) derart ausgerichtet ist, dass sie in einem Winkel zwischen 30° und 85° zu einer Fläche (33) des Blattes (4) angeordnet ist, wobei die Sensorspulenachse (15) beim Vorbeilaufen am Objekt insbesondere derart ausgerichtet ist, dass sie in einem Winkel zwischen 65° und 75° zu einer durch die erste Achse (4) und die Längsachse (9) des Sensors (8) definierten ersten Ebene (41) angeordnet ist.

## Revendications

1. Capteur (8) sans contact destiné à détecter une position et/ou une vitesse d'un objet (4), comportant : au moins une bobine (11) de capteur qui est concrétisée pour induire des courants de Foucault dans l'objet (4), la bobine (11) de capteur étant disposée à une extrémité avant (10) du capteur (8), sur un mandrin (12) de bobine, le capteur (8) présentant une forme longitudinale, le mandrin (12) de bobine doté d'un plan inférieur (13), d'un plot (17) et d'une plaque (14) de couverture étant disposé à l'extrémité avant (10) du capteur (8), et un fil de la bobine (11) de capteur étant enroulé autour du plot (17), la bobine (11) de capteur définissant un axe (15) de bobine, **caractérisé en ce que** la bobine (11) de capteur est disposée de telle façon que l'axe (15) de bobine soit disposé suivant un angle compris entre 30° et 85° par rapport à un axe longitudinal (9) du capteur (8), et **en ce que** la bobine (11) de capteur est disposée de telle façon qu'un point central (29) de la bobine (11) de capteur qui est disposé sur l'axe (15) de bobine soit disposé à côté d'un axe médian longitudinal (9) du capteur (8).

2. Capteur selon la revendication 1, l'axe (15) de bobine étant disposé suivant un angle compris entre 65° et 75° par rapport à l'axe longitudinal (9) du capteur (8) .

3. Capteur selon l'une quelconque des revendications précédentes, le mandrin (12) de bobine doté du plan inférieur (13), du plot (17) et de la plaque (14) de couverture étant réalisé d'un seul tenant, par exemple en plastique.

4. Capteur selon l'une quelconque des revendications précédentes, le plan inférieur (13) coupant une broche (31) de capteur à l'extrémité avant (10) en définissant un bout coupé, la bobine (11) de capteur se trouvant au plus à la même distance que l'extrémité avant de la broche (31) de capteur ou derrière celle-ci.

5. Capteur selon l'une quelconque des revendications précédentes, une seconde bobine (21) de capteur étant disposée à l'extrémité avant (10) du capteur (8).

6. Capteur selon la revendication 5, la première bobine (11) et la seconde bobine (21) étant disposées dans une position inversée en miroir par rapport à un plan médian (22), un axe médian longitudinal (9) du capteur (8) faisant partie du plan médian (22).

7. Capteur selon la revendication 5 ou 6, la seconde bobine (21) de capteur étant construite identiquement à la première bobine (11) de capteur.

8. Capteur selon la revendication 4, l'extrémité avant (10) de la broche (31) de capteur se trouvant au moins dans la même position avant (30) par rapport à l'axe longitudinal (9) du capteur qu'un rebord (19) de la plaque (14) de couverture, protégeant le rebord (19) et la bobine (11) pendant un processus de montage du capteur.

9. Capteur selon la revendication 8, le rebord (19) de la plaque (14) étant disposé par rapport à l'axe (9) du capteur dans une direction radiale à l'intérieur de la surface extérieure (20) de la broche (31) de capteur.

10. Appareil doté d'un trou (7) de réception, muni d'un capteur (8) selon l'une des revendications précédentes, le capteur (8) étant disposé à l'intérieur du trou (7) de réception, des moyens (32) de fixation étant disposés pour fixer le capteur (8) dans une orientation angulaire prédéterminée par rapport au trou (7) .

11. Appareil selon la revendication 10, le trou (7) de réception présentant la même aire en section droite que le capteur (8), particulièrement une aire en section droite circulaire.

12. Turbocompresseur (1) comportant un appareil selon l'une des revendications 10 et 11, le turbocompresseur (1) comportant en outre un rotor (3) de turbine doté d'aubes (4), l'appareil étant un carter (2) dudit turbocompresseur et l'objet étant une aube (4) dudit rotor (3) de turbine, l'objet tournant autour d'un premier axe (5), l'axe (15) de bobine de capteur, lorsqu'il passe devant l'objet (4), étant aligné de manière à être disposé suivant un angle compris entre 30° et 85° par rapport à une surface (33) de l'aube (4), l'axe (15) de bobine de capteur, lorsqu'il passe devant l'objet, étant en particulier aligné de manière à être disposé suivant un angle compris entre 65° et 75° par rapport à un premier plan (41) qui est défini par le premier axe (4) et l'axe longitudinal (9) du capteur (8) .
